(19) **Europäisches Patentamt / European Patent Office / Office européen des brevets**

(11) **EP 3 539 204 B1**

(12) **FASCICULE DE BREVET EUROPEEN**

(45) Date de publication et mention de la délivrance du brevet:
**22.02.2023 Bulletin 2023/08**

(21) Numéro de dépôt: **17804602.5**

(22) Date de dépôt: **16.10.2017**

(51) Classification Internationale des Brevets (IPC):
**H02M 1/42** *(2007.01)*     **H02M 7/219** *(2006.01)*
**H02J 7/02** *(2006.01)*

(52) Classification Coopérative des Brevets (CPC):
**H02M 1/4216; H02J 7/02; H02M 1/4233;**
**H02M 7/219;** H02J 2207/20; Y02B 40/00;
Y02B 70/10

(86) Numéro de dépôt international:
**PCT/FR2017/052834**

(87) Numéro de publication internationale:
**WO 2018/087446 (17.05.2018 Gazette 2018/20)**

(54) **PROCÉDÉ DE COMMANDE D'UN REDRESSEUR TRIPHASÉ POUR UN DISPOSITIF DE CHARGE EMBARQUÉ SUR UN VÉHICULE ÉLECTRIQUE OU HYBRIDE**

VERFAHREN ZUR STEUERUNG EINES DREIPHASIGEN GLEICHRICHTERS FÜR EINE LADEVORRICHTUNG AN BORD EINES ELEKTRO- ODER HYBRIDFAHRZEUGS

METHOD FOR CONTROLLING A THREE-PHASE RECTIFIER FOR A CHARGING DEVICE ON BOARD AN ELECTRIC OR HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2016 FR 1660902**

(43) Date de publication de la demande:
**18.09.2019 Bulletin 2019/38**

(73) Titulaires:
• **Renault s.a.s**
  **92100 Boulogne Billancourt (FR)**
• **Nissan Motor Co. Ltd**
  **Yokohama-Shi, Kanagawa 220-8623 (JP)**

(72) Inventeurs:
• **MERIENNE, Ludovic**
  **91190 Gif sur yvette (FR)**
• **KVIESKA, Pedro**
  **78000 Versailles (FR)**

(74) Mandataire: **Renault Group**
  **Renault s.a.s.**
  **API : TCR GRA 2 36**
  **1, Avenue du Golf**
  **78084 Guyancourt Cedex (FR)**

(56) Documents cités:
**US-A1- 2003 128 563**

• **SONG WEI-ZHANG ET AL: "A Hybrid Control Method to Suppress the Three-Time Fundamental Frequency Neutral-Point Voltage Fluctuation in a VIENNA Rectifier", IEEE JOURNAL OF EMERGING AND SELECTED TOPICS IN POWER ELECTRONICS, IEEE, PISCATAWAY, NJ, USA, vol. 4, no. 2, 1 juin 2016 (2016-06-01), pages 468-480, XP011607988, ISSN: 2168-6777, DOI: 10.1109/JESTPE.2015.2503125 [extrait le 2016-04-29]**
• **VAHEDI HANI ET AL: "Single-Phase Single-Switch Vienna Rectifier as Electric Vehicle PFC Battery Charger", 2015 IEEE VEHICLE POWER AND PROPULSION CONFERENCE (VPPC), IEEE, 19 octobre 2015 (2015-10-19), pages 1-6, XP032834015, DOI: 10.1109/VPPC.2015.7353019**

EP 3 539 204 B1

- **MINO K ET AL: "A three-phase AC-DC converter using universal input voltage type PFC circuit and phase-shift controlled DC-DC converters", CONFERENCE RECORD OF THE 2002 IEEE INDUSTRY APPLICATIONS CONFERENCE : 37TH IAS ANNUAL MEETING ; 13 - 18 OCTOBER 2002, PITTSBURGH, PENNSYLVANIA, USA; [CONFERENCE RECORD OF THE IEEE INDUSTRY APPLICATIONS CONFERENCE. IAS ANNUAL MEETING], IEEE SERVICE CE, 13 October 2002 (2002-10-13), page 2117, XP032143380, DOI: 10.1109/IAS.2002.1043823 ISBN: 978-0-7803-7420-1**

**Description**

La présente invention concerne un procédé de commande d'un redresseur triphasé pour un dispositif de charge à entrée triphasée, comprenant un convertisseur AC-DC (courant alternatif-courant continu) isolé. Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Ils assurent donc une conversion d'un courant alternatif en courant continu. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

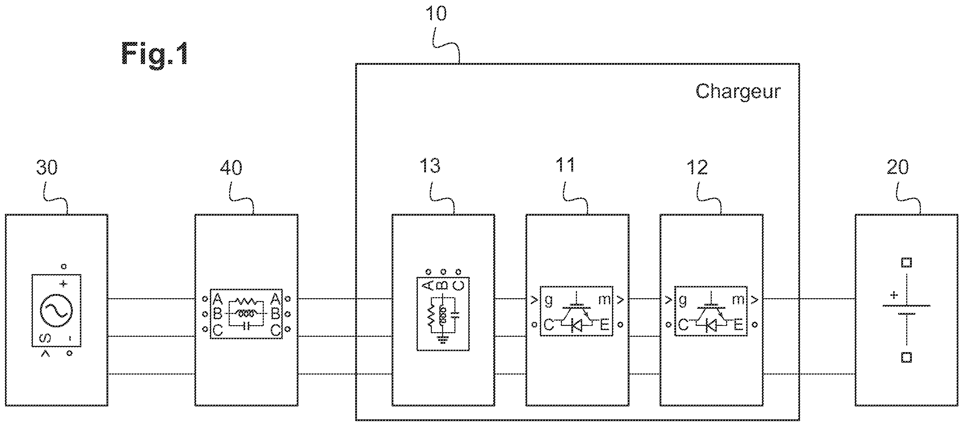

On se place ici dans la catégorie des dispositifs de charge à entrée triphasée, qui présentent une puissance de charge supérieure relativement aux dispositifs de charge à entrée monophasée. La figure 1 illustre une topologie connue d'un dispositif de charge 10 isolé, embarqué sur un véhicule électrique ou hybride pour la recharge de la batterie haute tension 20 du véhicule à partir du réseau électrique triphasé 30 auquel le dispositif de charge embarqué 10 est connecté par l'intermédiaire de l'impédance de ligne 40 du réseau.

Afin de mettre en oeuvre la fonction de conversion AC-DC avec isolation galvanique, il est connu d'utiliser un dispositif de charge 10 comprenant un premier convertisseur AC-DC, qui comporte un circuit correcteur de facteur de puissance 11 (PFC, pour « Power factor Correction ») afin de limiter les harmoniques de courant d'entrée, et un deuxième convertisseur DC-DC (courant continu-courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 11 par rapport au réseau électrique triphasé 30.

Le circuit PFC 11 est géré par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC, il est possible de mettre en oeuvre un redresseur triphasé trois niveaux à trois interrupteurs, communément connu sous le nom de redresseur triphasé de Vienne. Le choix de cette topologie est en effet particulièrement avantageux du point de vue des performances pour la correction de facteur de puissance.

Le document de brevet CN 104811061 décrit à la figure 1 une modélisation d'un tel redresseur PFC triphasé où chaque phase de la tension d'entrée alternative triphasée est reliée par des inductances respectives L1, L2, L3 à un bras de commutation du redresseur pourvu d'une cellule d'interrupteurs de puissance, respectivement S1, S2, S3, les cellules d'interrupteurs de puissance étant disposées chacune entre une inductance respective et un point milieu M entre les deux tensions de sortie du redresseur, correspondant respectivement à la tension sur un premier condensateur de sortie C1 connecté entre le point milieu et une ligne d'alimentation positive et à la tension sur un deuxième condensateur de sortie C2 connecté entre le point milieu et une ligne d'alimentation négative.

Généralement pour commander un tel redresseur, on mesure les tensions et les courants en entrée de chaque interrupteur ainsi qu'en sortie du redresseur et on utilise des boucles de régulation permettant de générer des rapports cycliques nécessaires pour régler le temps de conduction moyen des interrupteurs.

L'état de l'art sur l'application des rapports cycliques sur chaque bras de commutation d'un redresseur triphasé de Vienne consiste à utiliser l'un ou l'autre des deux interrupteurs en fonction du sens de circulation du courant sur le bras.

L'article "A Hybrid Control Method to Suppress the Three-Time Fundamental Frequency Neutral-Point Voltage Fluctuation in a VIENNA Rectifier", de Song Wei-Zhang et al., vise à maintenir la tension du point milieu du PFC triphasé constante, en annulant le courant issu des cellules d'interrupteurs de puissance et arrivant sur ce point milieu.

L'article "Single-Phase Single-Switch Vienna Rectifier as Electric Vehicle PFC Battery Charger" de Vahedi Hani et al., montre l'utilisation possible d'un PFC Vienna comme chargeur de batterie pour un véhicule électrique.

Dans un contexte où on cherche à faire passer une forte puissance à travers le chargeur pour la recharge de la batterie, il existe un risque important de fluctuation des courants (« ripples » selon la terminologie anglo-saxonne) au niveau des condensateurs de sortie du redresseur triphasé, ce qui rend plus complexe la régulation des tensions de sortie du redresseur par l'étage DC-DC prévu pour évacuer l'énergie stockée dans les condensateurs vers la batterie.

Il existe un besoin pour une stratégie d'application des rapports cycliques sur les bras de commutation du redresseur triphasé de Vienne qui soit adaptée à ce contexte.

Conformément à l'invention, ce but est atteint par un procédé de commande d'un circuit correcteur de facteur de puissance pour un dispositif de charge de batterie embarqué dans un véhicule automobile électrique ou hybride avec les caractéristiques de la revendication 1.

Par « sensiblement » on entend ici un écart d'au maximum 10% sur plusieurs périodes électriques.

On détermine les combinaisons de fermeture d'interrupteurs en sélectionnant, pour chaque instant donné de la période des courants de consigne, les combinaisons de fermeture d'interrupteurs permettant de découper les tensions entre phases du réseau selon l'un ou l'autre de deux états de tension délimitant toute valeur de tension pouvant être réalisée pour les tensions cibles entre phase.

On divise la période des courants de consigne en des portions de périodes représentant un sixième d'une période complète des courants de consigne et on applique les étapes du procédé sur chaque portion de période.

Avantageusement, on détermine, pour chaque combinaison de fermeture d'interrupteurs, le temps de fermeture où l'on a les interrupteurs pilotés des bras de commutation concernés par ladite combinaison de fermeture à l'état fermé, et on calcule les rapports cycliques pour chaque interrupteur piloté en fonction des temps de fermeture déterminés.

Avantageusement, on détermine les temps de fermeture en fonction des tensions cibles entre-phase souhaitées à un instant donnée ainsi que des mesures de courant dans chacun des condensateurs de sortie.

L'invention concerne également un dispositif de charge selon la revendication 4. Les moyens de traitement du dispositif de commande du dispositif de charge peuvent par exemple comprendre un processeur, par exemple un microprocesseur, un microcontrôleur, ou autre.

L'invention concerne encore un véhicule automobile électrique ou hybride comprenant une batterie haute tension et un dispositif de charge embarqué selon l'invention, apte à charger la batterie à partir d'un réseau d'alimentation électrique triphasé, ledit dispositif de charge comportant un convertisseur AC-DC isolé comprenant un circuit correcteur de facteur de puissance et un convertisseur DC-DC, ledit circuit correcteur de facteur de puissance étant un redresseur triphasé de Vienne.

D'autres particularités et avantages de l'invention ressortiront à la lecture de la description faite ci-après d'un mode de réalisation particulier de l'invention, donné à titre indicatif mais non limitatif, en référence aux figures suivantes dans lesquelles :

- la figure 1 illustre de façon schématique une topologie connue d'un dispositif de charge de batterie destiné à être embarqué sur un véhicule automobile électrique ou hybride,
- la figure 2 illustre de façon schématique la structure d'un redresseur triphasé de Vienne intégré au dispositif de charge de la figure 1, sans le filtre d'entrée,
- la figure 3 est un schéma illustrant l'évolution des tensions de phase $V_1$, $V_2$ $V_3$ en entrée du redresseur sur une période du courant réseau.

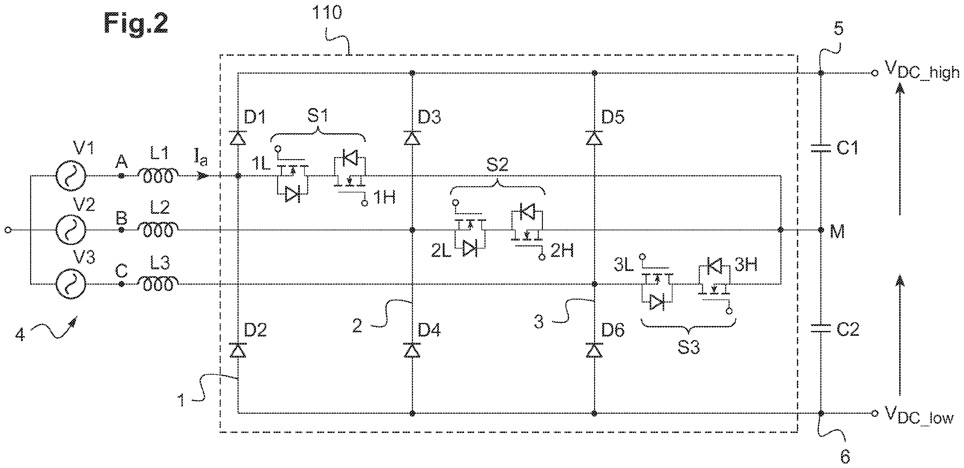

La figure 2 rappelle donc la structure du redresseur triphasé de Vienne utilisé ici pour la correction du facteur de puissance du dispositif de charge. Le redresseur triphasé de Vienne 110 comprend trois connexions entrantes parallèles couplées chacune à une phase A, B, C d'un réseau d'alimentation électrique 4 triphasé par l'intermédiaire d'une bobine d'inductance en série L1, L2, L3, et reliée chacune à une paire d'interrupteurs S1, S2, S3 formant un premier un deuxième et un troisième bras de commutation du redresseur triphasé de Vienne.

Chaque paire d'interrupteurs S1, S2, S3 comprend un montage série constitué d'un premier interrupteur correspondant 1H, 2H, 3H, qui est piloté quand un courant d'entrée correspondant Ia, Ib, Ic est positif, et d'un second interrupteur correspondant 1L, 2L, 3L qui est piloté quand le courant d'entrée correspondant est négatif. Autrement dit, on utilise un seul interrupteur piloté sur une branche de commutation pour le hachage du courant. Les interrupteurs sont formés par des composants semi-conducteurs commandés à la fermeture et à l'ouverture, tel que par exemple des transistors MOS (acronyme anglais pour « Metal Oxide Semiconductor »), connectés en antiparallèle avec une diode. Les interrupteurs 1H sont également nommés interrupteurs haut et les interrupteurs 1L, interrupteurs bas.

Le redresseur triphasé de Vienne comprend aussi trois branches parallèles 1, 2 et 3, comportant chacune deux diodes D1 et D2, D3 et D4 et D5 et D6, qui forment un pont triphasé à six diodes permettant de redresser le courant et la tension prélevés à partir du réseau d'alimentation électrique 4 triphasé. Chaque entrée du redresseur triphasé de Vienne est connectée, par une connexion entrante parallèle respective, à un point de connexion situé entre deux diodes d'une même branche 1, 2 et 3.

Les deux extrémités communes des branches 1, 2 et 3 constituent deux bornes de sorties 5 et 6, respectivement positive et négative, du redresseur triphasé de Vienne, qui sont destinées à être couplées au dispositif DC-DC.

Les bras de commutation S1, S2, S3 de chaque phase sont par ailleurs connectés chacun respectivement entre le point de connexion situé entre les deux diodes des première, deuxième et troisième branches 1, 2 et 3 et un point milieu M des tensions de sortie $V_{DC\_high}$ et $V_{DC\_low}$ du redresseur triphasé de Vienne, correspondant respectivement à la tension sur un condensateur de sortie C1 entre la borne de sortie positive 5 du redresseur triphasé et le point milieu M et à la tension sur un condensateur de sortie C2 entre le point milieu M et une borne de sortie négative 6 du redresseur triphasé.

A noter que la tension sur les condensateurs de sortie C1, C2 est asservie de façon indépendante par le convertisseur DC-DC du dispositif de charge connecté en sortie du redresseur triphasé de Vienne, selon la topologie globale illustré à la figure 1. Autrement dit, les tensions de sortie du redresseur triphasé de Vienne sont commandées par le convertisseur DC-DC.

Le redresseur triphasé de Vienne intercalé à l'entrée de l'alimentation du chargeur assume le rôle de correction du facteur de puissance du chargeur. Un tel rôle permet d'empêcher les courants perturbateurs (harmoniques) produits par le chargeur, de circuler à travers l'impédance du réseau, située en amont du redresseur de Vienne.

Les bras de commutation S1, S2 et S3 de chaque phase sont contrôlés aux moyens de trois signaux de commande PWM (d'après l'anglais « Pulse Width Modulation ») ayant un rapport cyclique variable individuellement réglé par des moyens de traitement de type microcontrôleur par exemple (non représenté). Ainsi, les moyens de traitement sont adaptés à déterminer les rapports cycliques des signaux de commande de commutation des interrupteurs des bras de commutation du redresseur, nécessaires pour l'asservissement des courants sinusoïdaux en entrée du redresseur. A noter qu'à chaque instant, on a seulement un interrupteur par bras de commutation qui a une influence sur les tensions entre-phases, l'autre interrupteur étant court-circuité par la diode montée en parallèle.

Soient $V_1$, $V_2$ et $V_3$ les tensions simples, entre phases et neutre, en entrée du redresseur triphasé de Vienne et L la valeur des inductances L1, L2 et L3 connectées en série respectivement entre les points A, B et C et les bras de commutation du redresseur.

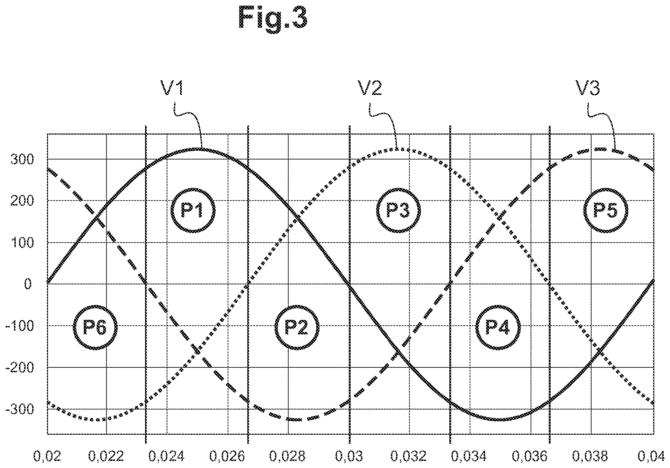

Le calcul des rapports cycliques de hachage à appliquer via les bras de commutation est effectué en fonction des valeurs des tensions de phase qui varient au cours d'une période. Pour cela, la période du courant réseau triphasé est divisée en six portions de périodes, comme le montre la figure 3, illustrant l'évolution des courants de consigne représentés par les tensions de phase $V_1$, $V_2$ $V_3$ sur une période du courant réseau. Comme on cherche à avoir un facteur de puissance le plus proche de 1, les tensions de phase sur chaque bras vont être en phase avec les courants. Les portions de période référencées P1 à P6 sur la figure 3 sont aisément identifiables à partir des courants de consigne. Par exemple, la portion de période P1 correspond à un courant de consigne positif sur le premier bras de commutation 1 et à des courants de consigne négatifs sur les deuxième et troisième bras de commutation S2 et S3.

Pour chaque portion de période ainsi identifiée, on va déterminer les tensions entre phases $V_{12}$ et $V_{13}$ susceptibles d'être réalisées pour les différentes combinaisons possibles de fermeture d'interrupteurs des bras de commutation S1, S2 et S3 du redresseur. A noter qu'à chaque instant, on utilise un seul interrupteur piloté sur une branche de commutation pour le hachage du courant, de sorte que seul un interrupteur par bras a une influence sur les tensions entre-phases, l'autre étant court-circuité par la diode en parallèle.

Pour la première portion de période P1, les tensions entre phases suivantes sont susceptibles d'être réalisées en fonction des interrupteurs qui sont fermés :

| Interrupteur fermés | $V_{12}$ | $V_{13}$ |
|---|---|---|
| Tout ouvert | 2*Vdc | 2*Vdc |
| S1 | Vdc | Vdc |
| S2 | Vdc | 2*Vdc |
| S3 | 2*Vdc | Vdc |
| S1S2 | 0 | Vdc |
| S1S3 | Vdc | 0 |
| S2S3 | Vdc | Vdc |
| S1S2S3 | 0 | 0 |

En fonction des combinaisons de fermeture des interrupteurs de chacune des phases, il est donc possible de réaliser, pour les tensions entre phases $V_{12}$ et $V_{13}$, toute valeur de tension comprise entre 0 et $2*V_{dc}$. Pour limiter les fluctuations de courant, on choisit de découper entre deux états proches, c'est-à-dire que pour réaliser une tension entre 0V et Vdc, on choisira des états à 0V ou $V_{dc}$ et pour une tension entre Vdc et 2*Vdc, on choisira des états à Vdc ou $2*V_{dc}$.

La stratégie doit permettre de traiter tous les cas possibles pour chaque instant donné. Dans la suite, nous donnerons un exemple d'application étant entendu que l'approche sera exactement la même pour toute valeur souhaitée de commande $V_{12}$ et $V_{13}$.

Nous prenons un exemple où nous nous plaçons au début de la première portion de période identifié P1. Lors de la mise en oeuvre de la régulation de puissance qui va générer des tensions à réaliser via les bras de commutation, l'équation qui régit chaque courant (par exemple le courant différentiel $I_{ab}$ entre les phases A et B), en entrée du redresseur triphasé de Vienne est la suivante :

$$L\dot{I}_{ab} = V_{12} - V_{12\_commande}$$

où $V_{12\_commande}$ est la tension commandée appliquée par la régulation.

Nous pouvons estimer l'ordre de grandeur du terme à gauche de l'équation précédente. Pour un courant commandé à 22kW entre phases :

$$I_{ab} = 32\sqrt{2}\sqrt{3}\sin(\omega t) = 78.38\sin(\omega t)$$

Sa dérivée est égale à :

$$\dot{I}_{ab} = 78.38 * \omega * \cos(\omega t) = 78.38 * 2 * pi * 50 * \cos(\omega t) = 24625\cos(\omega t)$$

En multipliant la dérivée par L=60$\mu$H, on obtient :

$$L\dot{I}_{ab} = 60 * 10^{-6} * 24625\cos(\omega t) = 1.47\cos(\omega t)$$

La différence entre la tension entre phases mesurée en entrée du redresseur $V_{12}$ et celle commandée par la régulation $V_{12\_commande}$ est sinusoïdale avec une amplitude de l'ordre de 1.5V. Compte tenu de l'amplitude de la tension composée à $230 * \sqrt{2}\sqrt{3} = 563V$ , la différence entre les tensions est quasi-nulle pour une commande en régime stabilisée.

Au début de la première portion de période P1 ($V_{dc}$ étant de l'ordre de 400V), on a :

$$V_{12\_cible} > V_{dc}$$

$$V_{13\_cible} < V_{dc}$$

Pour limiter les « fluctuations » de courant, comme indiqué précédemment, nous allons générer ces différences de tension avec des valeurs choisies entre deux états les plus proches. Autrement dit, pour générer $V_{12}$ on choisira entre des états qui sont à $V_{dc}$ ou $2*V_{dc}$, et pour réaliser $V_{13}$ on choisira des états entre 0 et $V_{dc}$. En reprenant le tableau présenté précédemment, certaines combinaisons de fermeture d'interrupteurs, indiquées en grisées ci-dessous, se retrouve donc exclues de la commande :

| Interrupteurs fermés | $V_{12}$ | $V_{13}$ |
|---|---|---|
| Tout ouvert | 2*Vdc | 2*Vdc |
| S1 | Vdc | Vdc |
| S2 | Vdc | 2*Vdc |
| S3 | 2*Vdc | Vdc |
| S1S2 | 0 | Vdc |
| S1S3 | Vdc | 0 |
| S2S3 | Vdc | Vdc |
| S1S2S3 | 0 | 0 |

Les tensions qu'il est possible de réaliser pour $V_{12}$ et $V_{13}$, ainsi que les courants sur les condensateurs de sortie C1 et C2, respectivement I_high et I_low, sont donc, en fonction des combinaisons d'interrupteurs retenues :

| Interrupteurs fermés | $V_{12}$ | $V_{13}$ | I_high | I_low |
|---|---|---|---|---|
| S1 | Vdc | Vdc | | I_1 |
| S3 | 2*Vdc | Vdc | I_1 | I_2 |
| S1S3 | Vdc | 0 | | I_2 |
| S2S3 | Vdc | Vdc | I_1 | |

Nous disposons donc de 4 combinaisons de fermeture d'interrupteurs, exclusives entre elles.

Partant de ces 4 combinaisons de fermetures, soient les variables suivantes:

Alpha_1 le temps de fermeture où l'on a la combinaison de fermeture suivante : interrupteur piloté du bras de commutation S1 à l'état fermé;

Alpha_3 le temps de fermeture où l'on a la combinaison de fermeture suivante : interrupteur piloté du bras de commutation S3 à l'état fermé;

Alpha_13 le temps de fermeture où l'on a la combinaison de fermeture suivante : interrupteurs pilotés des bras de commutation S1 et S3 à l'état fermés;

Alpha_23 le temps de fermeture où l'on a la combinaison de fermeture suivante : interrupteurs pilotés des bras de commutation S2 et S3 à l'état fermés.

Autrement dit, chacune de ces variables précédemment définies représente le pourcentage de temps du cycle de hachage où la combinaison concernée de fermeture d'interrupteurs est active.

Nous pouvons maintenant écrire les équations suivantes :

a) ci-après l'équation décrivant la construction de la tension cible $V_{12\_cible}$, soit la tension $V_{12}$ à réaliser suivant la commande appliquée par la régulation:

$$(1) \quad V_{12\_cible} = Alpha\_1 * V_{dc} + Alpha\_3 * 2 * V_{dc} + Alpha\_13 * V_{dc} + Alpha\_23 * V_{dc}$$

b) ci-après l'équation décrivant la construction de la tension cible $V_{13\_cible}$, soit la tension $V_{13}$ à réaliser suivant la commande appliquée par la régulation:

$$(2) \quad V_{13\_cible} = Alpha\_1 * V_{dc} + Alpha\_3 * V_{dc} + Alpha\_13 * 0 + Alpha\_23 * V_{dc} =$$

c) ci-après l'équation décrivant la fourniture de courants égaux sur les condensateurs de sortie C1 et C2 (I_high = I_low):

$$I\_high = Alpha\_3 * I\_1 + Alpha\_23 * I\_1$$

$$I\_low = Alpha\_1 * I\_1 + Alpha\_3 * I\_2 + Alpha\_13 * I\_2$$

ce qui donne l'équation (3) suivante, pour avoir une répartition des courants égale dans chaque condensateur de sortie:

$$(3) \quad Alpha\_1 * (-I\_1) + Alpha\_3 * (I\_1 - I\_2) + Alpha\_13 * (-I\_2) + Alpha\_23 * (I\_1) = 0$$

d) ci-après l'équation décrivant la somme de tous les rapports cyclique de hachage égale à 1 (100% de la période) :

Somme de tous les rapports cycliques égale à 1 (100% de la période)

$$(4) \quad Alpha\_1 + Alpha\_3 + Alpha\_13 + Alpha\_23 = 1$$

Soit un système de 4 équations (1), (2), (3) et (4) à 4 inconnus Alpha_1, Alpha_3, Alpha_13, Alpha_23. A un instant donné, on peut le résoudre en fonction des valeurs de $V_{12\_cible}$ et $V_{13\_cible}$ , ainsi que des mesures de courant I_1 et I_2 sur les condensateurs de sortie C1 et C2 respectivement.

En combinant les équations (1) et (4), on obtient :

$$V_{dc}*(2*Alpha\_3 + Alpha\_1 + Alpha\_13 + Alpha\_23) = V_{12\_cible}$$

soit :

$$Alpha\_3 = \frac{V_{12\_cible} - V_{dc}}{V_{dc}}$$

Puis, en combinant les équations (2) et (4), on obtient :

$$V_{dc}*(Alpha\_3 + Alpha\_1 + Alpha\_23) = V_{13\_cible}$$

soit :

$$Alpha\_13 = \frac{V_{dc} - V_{13\_cible}}{V_{dc}}$$

Puis, en combinant les équations (3) et (4), avec Alpha_3 et Alpha_13 tels que définis précédemment, on obtient :

A partir de l'équation (4) :

$$Alpha\_1 = 1 - Alpha\_3 - Alpha\_13 - Alpha\_23$$

Puis, à partir de l'équation (3) :

$$I\_1*(Alpha\_3 - 1 + Alpha\_3 + Alpha\_13 + Alpha\_23 + Alpha\_23) + I\_2 * (-Alpha\_3 - Alpha\_13) = 0$$

Soit:

$$Alpha\_23 = \frac{I\_2}{2I\_1}(Alpha\_3 + Alpha\_13) + \frac{1}{2}(1 - 2Alpha\_3 - Alpha\_13)$$

Et enfin, l'équation (4) résout complètement le problème:

$$Alpha\_1 = 1 - Alpha\_3 - Alpha13 - Alpha23$$

On peut alors calculer les rapports cycliques de chaque interrupteur à partir des 4 combinaisons de fermeture d'interrupteurs définis dans le tableau précédent, qui sont prises en compte pour la réalisation des tensions générées par la régulation.

Le rapport cyclique de fermeture dyc1 de l'interrupteur piloté du bras de commutation S1 correspond à la somme des temps de fermeture où l'on a les combinaisons de fermeture dans lesquelles ledit interrupteur est fermé, soit :

$$dyc1 = Alpha\_1 + Alpha\_13$$

Le rapport cyclique de fermeture dyc2 de l'interrupteur piloté du bras de commutation S2 correspond à la somme des temps de fermeture où l'on a les combinaisons de fermeture dans lesquelles ledit interrupteur est fermé, soit :

$$dyc2 = Alpha\_23$$

Le rapport cyclique de fermeture dyc3 de l'interrupteur piloté du bras de commutation S3 correspond à la somme des temps de fermeture où l'on a les combinaisons de fermeture dans lesquelles ledit interrupteur est fermé, soit :

$$dyc3 = Alpha\_1 + Alpha\_13 + Alpha\_23$$

On peut alors choisir de réaliser les combinaisons de fermeture dans l'ordre suivant : celle où les interrupteurs pilotés des bras de commutation S2 et S3 sont fermés, puis celle où l'interrupteur piloté du bras de commutation S3 est fermé, puis celle où les interrupteurs pilotés des bras de commutation S1 et S3 sont fermés et enfin celle où l'interrupteur piloté du bras de commutation S1 est fermé. En faisant ce choix, on peut donc fixer les retards à la fermeture dly1, dly2 et dly3, respectivement pour la fermeture de l'interrupteur piloté du bras de commutation S1, S2 et S3 comme suit :

$$dly1 = 1 - dyc1$$

$$dly2 = 0$$

$$dly3 = 0$$

A noter qu'on appliquera les rapports cycliques de fermeture et les retards à la fermeture comme définis précédemment sur l'interrupteur haut du bras concerné si le courant du bras est positif et sur l'interrupteur bas si le courant du bras concerné est négatif.

D'après les équations 2, prenons l'exemple de I_high :

$$I\_high = Alpha\_3 * I\_1 + Alpha\_23*I\_1$$

En remplaçant dans cette équation les formules obtenues pour déterminer les rapports Alpha_3 et Alpha_23, on obtient :

$$I\_high = I\_1*(Alpha\_3+Alpha\_23)$$
$$= I\_1*(I\_2/(2*I\_1)*(V\_13-V\_12)/V\_dc+1/2*(1+(V\_13-V\_dc)/V\_dc))$$
$$=1/(2*V\_dc)*(I\_2*V\_23+I\_1*V\_13)$$

Nous pouvons ensuite passer dans le référentiel de tension simple et considérer qu'il n'y a pas de mode commun soit I_1+I_2+I_3=0 donc:

$$I\_high = 1/(2*V\_dc)*(V\_1*I\_1+V\_2*I\_2+V\_3*(-I\_1-I\_2))$$
$$= 1/(2*V\_dc)*(V\_1*I\_1+V\_2*I\_2+V\_3*I\_3)$$

Ainsi si le chargeur charge à une puissance constante, la somme des puissances consommées sur chaque phase doit être constante et égale à la puissance de charge donc :

$$I\_high = 1/(2*V\_dc)*P\_charge$$

Le courant I_high est bien constant tant que la puissance de charge est constante. De même pour I_low puisque I_high=I_low.

Grâce à cette stratégie de pilotage des interrupteurs, permettant de répartir de façon égale le courant dans chaque condensateur de sortie, il est possible de réduire le courant maximum circulant dans les condensateurs de sortie du redresseur triphasé de Vienne. Cela offre la possibilité de prévoir au plus juste les capacités du PFC. De plus, pour des tensions constantes et égales sur les condensateurs de sortie, cette stratégie permet de garantir une puissance constante sur chacun des condensateurs de sortie, de sorte que la régulation de la sortie du redresseur par l'étage de conversion DC/DC est rendue plus robuste, dans la mesure où le flux d'énergie (la puissance) qu'il aura à évacuer vers la batterie est constant.

## Revendications

1. Procédé de commande d'un dispositif de charge (10) de batterie (20) embarqué dans un véhicule automobile électrique ou hybride, ledit dispositif de charge étant apte à être connecté à un réseau d'alimentation électrique triphasé (4) afin de charger la batterie et comportant un convertisseur AC-DC isolé comprenant un circuit correcteur de facteur de puissance (11) et un convertisseur DC-DC (12), ledit circuit correcteur de facteur de puissance (11) étant un redresseur triphasé de Vienne (110) comprenant un pont à diodes triphasé et trois bras de commutation (S1, S2, S3) intégrés au pont à diodes, les bras de commutation étant aptes à être connectés chacun à l'une des phases respectives (A, B, C) du réseau d'alimentation triphasé (4) par l'intermédiaire d'une bobine d'inductance en série (L1, L2, L3) et comprenant chacun un montage en série d'un interrupteur haut apte à être piloté quand le courant du réseau est positif et d'un interrupteur bas apte à être piloté quand le courant du réseau est négatif, les bras de commutation (S1, S2, S3) étant interconnectés en un point milieu (M) auquel sont reliés un premier condensateur de sortie (C1) pour supporter une première tension de sortie ($V_{DC\_high}$) du pont à diodes triphasé et un deuxième condensateur de sortie (C2) pour supporter une deuxième tension de sortie ($V_{DC\_low}$) du pont à diodes triphasé, lesdites tensions de sortie étant régulées indirectement par une régulation de courant à une même valeur de tension de sortie (Vdc), chaque bras étant piloté à l'aide de signaux de commande de modulation par largeur d'impulsion dont le rapport cyclique de commutation est déterminé en fonction de ladite régulation des courants en entrée du redresseur générant des tensions cibles entre phases à réaliser en fonction de valeurs de courants de consigne, **caractérisé en ce qu'**il comprend des étapes dans lesquelles :

   - on détermine, sur chaque portion de période représentant un sixième d'une période complète des courants de consigne, des combinaisons de fermeture d'interrupteurs, exclusives entre elles, aptes à réaliser les tensions cibles entre phases souhaitées par la régulation, de sorte que pour réaliser une tension cible supérieure à ladite valeur de tension de sortie (Vdc) on ne considère que les combinaisons d'interrupteurs permettant de réaliser ladite valeur de tension de sortie (Vdc) ou le double de ladite valeur de tension de sortie (2*Vdc) et pour réaliser une tension cible inférieure à ladite valeur de tension de sortie (Vdc), on ne considère que les combinaisons d'interrupteurs permettant de réaliser une tension nulle ou ladite valeur de tension de sortie (Vdc),
   - on détermine, pour chaque combinaison d'interrupteurs, le courant fourni sur chaque condensateur,
   - on mesure le courant de chaque condensateur,
   - on calcule les rapports cycliques pour chaque interrupteur piloté à partir des combinaisons de fermeture d'interrupteurs déterminées pour la réalisation des tensions cibles entre phases, de sorte à obtenir des courants égaux et sensiblement constants dans les deux condensateurs de sortie, à savoir dans un écart d'au maximum 10% sur plusieurs périodes électriques, les première et deuxième tensions de sortie étant commandées par ledit convertisseur DC-DC.

2. Procédé selon la revendication 1, **caractérisé en ce qu'**on détermine, pour chaque combinaison de fermeture d'interrupteurs, le temps de fermeture où l'on a les interrupteurs pilotés des bras de commutation concernés par ladite combinaison de fermeture à l'état fermé, et on calcule les rapports cycliques pour chaque interrupteur piloté en fonction des temps de fermeture déterminés.

3. Procédé selon la revendication 2, **caractérisé en ce qu'**on détermine les temps de fermeture en fonction des tensions cibles entre-phase souhaitées à un instant donné ainsi que des mesures de courant dans chacun des condensateurs de sortie.

4. Dispositif de charge (10) de batterie (20) pour un véhicule automobile électrique ou hybride, ledit dispositif de charge étant apte à être connecté à un réseau d'alimentation électrique triphasé (4) afin de charger la batterie et comportant un convertisseur AC-DC isolé comprenant un circuit correcteur de facteur de puissance (11) et un convertisseur DC-DC (12), ledit circuit correcteur de facteur de puissance (11) étant un redresseur triphasé de Vienne (110) comportant un pont à diodes triphasé et trois bras de commutation (S1, S2, S3) aptes à être connectés chacun à l'une des phases respectives (A, B, C) du réseau d'alimentation triphasé (4) par l'intermédiaire d'une bobine d'inductance en série (L1, L2, L3), les bras de commutation (S1, S2, S3) étant interconnectés en un point milieu (M) auquel sont reliés un premier condensateur de sortie (C1) pour supporter une première tension de sortie ($V_{DC\_high}$) du pont à diodes triphasé et un deuxième condensateur de sortie (C2) pour supporter une deuxième tension de sortie ($V_{DC\_low}$) du pont à diodes triphasé, chaque bras étant piloté à l'aide de signaux de commande de modulation par largeur d'impulsion dont le rapport cyclique de commutation est déterminé en fonction d'une régulation des courants en entrée du redresseur générant des tensions cibles entre phases à réaliser en fonction de valeurs de courants de consigne, ledit dispositif de charge comportant un dispositif de commande comprenant des moyens de traitement agencés pour exécuter les étapes du procédé selon l'une quelconque des revendications 1 à 3.

5. Véhicule automobile électrique ou hybride comprenant une batterie haute tension et un dispositif de charge embarqué selon la revendication 4, apte à charger la batterie à partir d'un réseau d'alimentation électrique triphasé, ledit dispositif de charge comportant un convertisseur AC-DC isolé comprenant un circuit correcteur de facteur de puissance (11) et un convertisseur DC-DC (12), ledit circuit correcteur de facteur de puissance (11) étant un redresseur triphasé de Vienne.

**Patentansprüche**

1. Verfahren zum Steuern einer in ein Elektro- oder Hybrid-Kraftfahrzeugs eingebauten Ladevorrichtung (10) einer Batterie (20), wobei die Ladevorrichtung mit einem dreiphasigen Stromversorgungsnetz (4) verbunden werden kann, um die Batterie zu laden, und einen isolierten AC-DC-Wandler, der eine Leistungsfaktor-Korrekturschaltung (11) enthält, und einen DC-DC-Wandler (12) aufweist, wobei die Leistungsfaktor-Korrekturschaltung (11) ein dreiphasiger Vienna-Gleichrichter (110) ist, der eine dreiphasige Diodenbrücke und drei in die Diodenbrücke integrierte Schaltarme (S1, S2, S3) enthält, wobei die Schaltarme je mit einer der Phasen (A, B, C) des dreiphasigen Versorgungsnetzes (4) über eine in Reihe geschaltete Drosselspule (L1, L2, L3) verbunden werden können und je eine Reihenschaltung eines oberen Schalters, der gesteuert werden kann, wenn der Strom des Netzes positiv ist, und eines unteren Schalters enthalten, der gesteuert werden kann, wenn der Strom des Netzes negativ ist, wobei die Schaltarme (S1, S2, S3) an einem Mittenpunkt (M) miteinander verbunden sind, mit dem ein erster Ausgangskondensator (C1), um eine erste Ausgangsspannung ($V_{DC\_high}$) der dreiphasigen Diodenbrücke auszuhalten, und ein zweiter Ausgangskondensator (C2) verbunden sind, um eine zweite Ausgangsspannung ($V_{DC\_low}$) der dreiphasigen Diodenbrücke auszuhalten, wobei die Ausgangsspannungen indirekt durch eine Stromregelung auf einen gleichen Ausgangsspannungswert (Vdc) geregelt werden, wobei jeder Arm mit Hilfe von Impulsbreitenmodulation-Steuersignalen gesteuert wird, deren Schalttastverhältnis abhängig von der Regelung der Ströme am Eingang des Gleichrichters bestimmt wird, die zu realisierende Zwischenphasen-Zielspannungen abhängig von Sollstromwerten erzeugt, **dadurch gekennzeichnet, dass** es Schritte enthält, in denen:

   - in jedem Periodenabschnitt, der ein Sechstel einer vollständigen Periode der Sollströme darstellt, sich gegenseitig ausschließende Schließkombinationen von Schaltern bestimmt werden, die die von der Regelung gewünschten Zwischenphasen-Zielspannungen realisieren können, damit zur Realisierung einer Zielspannung höher als der Ausgangsspannungswert (Vdc) nur die Schalterkombinationen berücksichtigt werden, die es ermöglichen, den Ausgangsspannungswert (Vdc) oder das Doppelte des Ausgangsspannungswerts (2*Vdc) zu realisieren, und zur Realisierung einer Zielspannung niedriger als der Ausgangsspannungswert (Vdc) nur die Schalterkombinationen berücksichtigt werden, die es ermöglichen, eine Nullspannung oder den Ausgangsspannungswert (Vdc) zu realisieren,
   - für jede Schalterkombination der an jedem Kondensator gelieferte Strom bestimmt wird,
   - der Strom jedes Kondensators gemessen wird,
   - die Tastverhältnisse für jeden gesteuerten Schalter ausgehend von den Schließkombinationen von Schaltern berechnet werden, die für die Realisierung der Zwischenphasen-Zielspannungen bestimmt werden, um gleiche und im Wesentlichen konstante Ströme in den zwei Ausgangskondensatoren zu erhalten, d.h. in einer Abweichung von maximal 10% über mehrere elektrische Perioden, wobei die ersten und zweiten Ausgangsspannungen vom DC-DC-Wandler gesteuert werden.

2. Verfahren nach Anspruch 1, **dadurch gekennzeichnet, dass** für jede Schließkombination von Schaltern die Schließzeit bestimmt wird, in der die von der Schließkombination betroffenen gesteuerten Schalter der Schaltarme im geschlossenen Zustand sind, und die Tastverhältnisse für jeden gesteuerten Schalter abhängig von den bestimmten Schließzeiten berechnet werden.

3. Verfahren nach Anspruch 2, **dadurch gekennzeichnet, dass** die Schließzeiten abhängig von den gewünschten Zwischenphasen-Zielspannungen zu einem gegebenen Zeitpunkt sowie von den Strommessungen in jedem der Ausgangskondensatoren bestimmt werden.

4. Ladevorrichtung (10) einer Batterie (20) für ein Elektro- oder Hybrid-Kraftfahrzeug, wobei die Ladevorrichtung mit einem dreiphasigen Stromversorgungsnetz (4) verbunden werden kann, um die Batterie zu laden, und einen isolierten AC-DC-Wandler, der eine Leistungsfaktor-Korrekturschaltung (11) enthält, und einen DC-DC-Wandler (12) aufweist, wobei die Leistungsfaktor-Korrekturschaltung (11) ein dreiphasiger Vienna-Gleichrichter (110) ist, der eine dreiphasige Diodenbrücke und drei Schaltarme (S1, S2, S3) aufweist, die je mit einer der Phasen (A, B, C) des dreiphasigen Versorgungsnetzes (4) über eine in Reihe geschaltete Drosselspule (L1, L2, L3) verbunden werden können, wobei die Schaltarme (S1, S2, S3) an einem Mittenpunkt (M) miteinander verbunden sind, mit dem ein erster Ausgangskondensator (C1), um eine erste Ausgangsspannung ($V_{DC\_high}$) der dreiphasigen Diodenbrücke auszuhalten, und ein zweiter Ausgangskondensator (C2) verbunden sind, um eine zweite Ausgangsspannung ($V_{DC\_low}$) der dreiphasigen Diodenbrücke auszuhalten, wobei jeder Arm mit Hilfe von Impulsbreitenmodulation-Steuersignalen gesteuert wird, deren Schalttastverhältnis abhängig von einer Regelung der Ströme am Eingang des Gleichrichters bestimmt wird, die zu realisierende Zwischenphasen-Zielspannungen abhängig von Sollstromwerten erzeugt, wobei die Ladevorrichtung eine Steuervorrichtung aufweist, die Verarbeitungseinrichtungen enthält, die eingerichtet sind, die Schritte des Verfahrens nach einem der Ansprüche 1 bis 3 auszuführen.

5. Elektro- oder Hybridkraftfahrzeug, das eine Hochspannungsbatterie und eine eingebaute Ladevorrichtung nach Anspruch 4 enthält, die die Batterie ausgehend von einem dreiphasigen Stromversorgungsnetz laden kann, wobei die Ladevorrichtung einen isolierten DC-DC-Wandler, der eine Leistungsfaktor-Korrekturschaltung (11) enthält, und einen DC-DC-Wandler (12) aufweist, wobei die Leistungsfaktor-Korrekturschaltung (11) ein dreiphasiger Vienna-Gleichrichter ist.

**Claims**

1. Method for controlling a battery (20) charging device (10) embedded in an electric or hybrid motor vehicle, said charging device being able to be connected to a three-phase electrical power supply network (4) in order to charge the battery and comprising an insulated AC-DC converter comprising a power factor correcting circuit (11) and a DC-DC converter (12), said power factor correcting circuit (11) being a Vienna three-phase rectifier (110) comprising a three-phase diode bridge and three switching arms (S1, S2, S3) incorporated in the diode bridge, the switching arms being able to be each connected to one of the respective phases (A, B, C) of the three-phase power supply network (4) via a series inductance coil (L1, L2, L3) and each comprising a series mounting of a top switch that can be driven when the current of the network is positive and of a bottom switch that can be driven when the current of the network is negative, the switching arms (S1, S2, S3) being interconnected at a midpoint (M) to which are linked a first output capacitor (C1) to support a first output voltage ($V_{DC\_high}$) of the three-phase diode bridge and a second output capacitor (C2) to support a second output voltage ($V_{DC\_low}$) of the three-phase diode bridge, said output voltages being regulated indirectly by a current regulator to a same output voltage value (Vdc), each arm being driven using pulse-width modulation control signals, the switching duty cycle of which is determined as a function of said regulation of the currents at the input of the rectifier generating target voltages between phases to be produced as a function of setpoint current values, **characterized in that** it comprises steps in which:

- over each period portion representing a sixth of a complete period of the setpoint currents, combinations of closure of switches, mutually exclusive, capable of producing the target voltages between phases desired by the regulation are determined, such that, to produce a target voltage greater than said output voltage value (Vdc) only the combinations of switches that make it possible to produce said output voltage value (Vdc) or twice said output voltage value (2*Vdc) are considered and, to produce a target voltage less than said output voltage value (Vdc), only the combinations of switches that make it possible to produce a zero voltage or said output voltage value (Vdc) are considered,
- for each combination of switches, the current supplied on each capacitor is determined,
- the current of each capacitor is measured,
- duty cycles are calculated for each switch driven on the basis of the combinations of closure of switches determined for the production of the target voltages between phases, so as to obtain currents that are equal and substantially constant in the two output capacitors, namely within a deviation of at most 10% over several electrical periods, the first and second output voltages being controlled by said DC-DC converter.

2. Method according to Claim 1, **characterized in that**, for each combination of closure of switches, the closure time in which the driven switches of the switching arms affected by said combination of closure are in the closed state is determined, and the duty cycles are calculated for each driven switch as a function of the determined closure times.

3. Method according to Claim 2, **characterized in that** the closure times are determined as a function of the interphase target voltages desired at a given instant and of the current measurements in each of the output capacitors.

4. Battery (20) charging device (10) for an electric or hybrid motor vehicle, said charging device being able to be connected to a three-phase electrical power supply network (4) in order to charge the battery and comprising an insulated AC-DC converter comprising a power factor correcting circuit (11) and a DC-DC converter (12), said power factor correcting circuit (11) being a Vienna three-phase rectifier (110) comprising a three-phase diode bridge and three switching arms (S1, S2, S3) that can each be connected to one of the respective phases (A, B, C) of the three-phase power supply network (4) via a series inductance coil (L1, L2, L3), the switching arms (S1, S2, S3) being interconnected at a midpoint (M) to which are linked a first output capacitor (C1) to support a first output voltage ($V_{DC\_high}$) of the three-phase diode bridge and a second output capacitor (C2) to support a second output voltage ($V_{DC\_low}$) of the three-phase diode bridge, each arm being driven using pulse-width modulation control signals, the switching duty cycle of which is determined as a function of a regulation of the currents at the input of the rectifier generating target voltages between phases to be produced as a function of setpoint current values, said charging device comprising a control device comprising processing means arranged to execute the steps of the method according to any one of Claims 1 to 3.

5. Electric or hybrid motor vehicle comprising a high-voltage battery and an embedded charging device according to Claim 4, capable of charging the battery from a three-phase electrical power supply network, said charging device comprising an insulated AC-DC converter comprising a power factor correcting circuit (11) and a DC-DC converter (12), said power factor correcting circuit (11) being a Vienna three-phase rectifier.

Fig.1

**Fig.2**

EP 3 539 204 B1

# Fig.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104811061

**Littérature non-brevet citée dans la description**

- **SONG WEI-ZHANG.** *A Hybrid Control Method to Suppress the Three-Time Fundamental Frequency Neutral-Point Voltage Fluctuation in a VIENNA Rectifier*

- **VAHEDI HANI.** *Single-Phase Single-Switch Vienna Rectifier as Electric Vehicle PFC Battery Charger*